(19) **Europäisches Patentamt / European Patent Office / Office européen des brevets**

(11) **EP 2 586 525 A1**

(12) **EUROPEAN PATENT APPLICATION**
published in accordance with Art. 153(4) EPC

(43) Date of publication:
**01.05.2013 Bulletin 2013/18**

(21) Application number: **11797651.4**

(22) Date of filing: **15.06.2011**

(51) Int Cl.:
**B01J 20/08** $^{(2006.01)}$       **B09B 3/00** $^{(2006.01)}$

(86) International application number:
**PCT/ES2011/070431**

(87) International publication number:
**WO 2011/161290 (29.12.2011 Gazette 2011/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.06.2010 ES 201030970**

(71) Applicant: **Universidad Pública De Navarra 31006 Pamplona (Navarra) (ES)**

(72) Inventors:
• **GIL BRAVO, Antonio**
  **31006 Pamplona**
  **Navarra (ES)**
• **KORILI, Sophia, A.**
  **31006 Pamplona**
  **Navarra (ES)**

(74) Representative: **Elzaburu Marquez, Alberto et al Elzaburu S.L.P.**
  **Miguel Angel 21,**
  **28010 Madrid (ES)**

(54) **MODIFICATION OF SALINE SLAGS FROM THE PROCESSES OF SECOND SMELTING OF ALUMINIUM AND THE USE THEREOF AS ADSORBENTS OF THE PRODUCTS OBTAINED**

(57) Modification of saline slags from the processes of second smelting of aluminium and the use thereof as adsorbents of the products obtained. The activation is described of saline slags from the processes of second smelting of aluminium through contact with acid, basic, or neutral aqueous solutions, separation of the aqueous solution and calcinations at high temperatures. The procedure of the invention permits the obtainment of materials having high specific surface area, even exceeding 200 m2, in particular when the slag is placed in contact with water under reflux conditions. The activated slags obtained may be utilized as adsorbents of heavy metals present in aqueous solutions. Having been utilized, they may be regenerated by means of treatment with acid solutions, washing and drying, and be reutilized.

EP 2 586 525 A1

Printed by Jouve, 75001 PARIS (FR)

## Description

## FIELD OF THE INVENTION

This invention relates to materials based on saline slags generated by means of melting at aluminium recycling processes (smelting), with capacity for removal of heavy metal ions ($Cd^{2+}$, $Cu^{2+}$, $Pb^{2+}$ and $Zn^{2+}$) from liquid solutions, as well as their activation procedure using aqueous solutions of acids or bases at several concentrations and temperatures.

## BACKGROUND OF THE INVENTION

The aluminium production is based on an electrolytic process, the Hall-Héroult process [1], in which metallic aluminium is obtained from the reduction of aluminium oxide. The metal obtained with this process is called primary aluminium. Aluminium oxide used as starting material is extracted from natural bauxite in the Bayer process [1].

The recycling of aluminium is very important, since the wastes of the metal can be almost completely reused without any loss of quality. The metal obtained in this way is called secondary aluminium, because it originates from an existing aluminium metal. The recycling of the aluminium is an essential part of the industry of the aluminium. The aluminium destined for recycling can be divided into two categories: preconsumer by-products from the production of primary aluminium, and scrap, associated with postconsumer aluminium. The by-products have their origin in the manufacturing process of materials of aluminium. Their quality and composition are known. It can fuse without previous treatments. The scrap is a material of aluminium proceeding from articles of aluminium used and rejected at the end of their life cycle. In this type of scrap it is necessary to carry out processes of treatment and previous separation to recover the major possible quantity of aluminium. By means of melting, the by-products and scrap are transformed into various forms for subsequent commercialization.

Comparing primary and secondary aluminium production, between 5 and 20 % of the energy required for the production of primary aluminium is necessary for the aluminium secondary process [1]. In spite of this important advantage, primary aluminium production still plays an important role in satisfying world demand for the metal, since secondary production alone is unable to meet current needs.

From an environmental point of view, the secondary process causes less environmental impact than the primary process [2]. Regarding the waste generation, one of the products of the alkaline extraction of aluminium oxide from bauxite in the primary process is *red mud*. The quantity of this waste, as well as its physical-chemical properties, depend on the type of bauxite employed. This red mud consists mainly of oxides of iron, aluminium, silicon and titanium, among others. The management of this waste is normally carried out by means of controlled landfill disposal. Recently, several applications of this type of waste have been reported in the literature [3-10]. During the secondary aluminium smelting process, various types of wastes may also be generated: powders from the treatment of the melting furnace gases and of the processes of grinding, foams, skimmings, and saline slags. Among them, in terms of the amount generated, the most important is saline slag.

The saline slags from the secondary aluminium smelting processes are cataloged as hazardous wastes with EWL (European Waste List) code 100308 [11]. They are generated when various salts are used to cover the molten material in order to prevent its oxidation, to increase the performance of the process, to enlarge its thermal efficiency and to mechanically scatter the oxides and metallic or nonmetallic substances present in the smelting furnace. The amount of fondants used and of saline slags generated depends on the impurities in the aluminium scrap and byproducts, on the type of furnace used, and on the foundry conditions. The average composition of the saline slag can be summarized as: metallic aluminium, several oxides (this fraction being known as nonmetallic products), flux brines (salts, normally NaCl and KCl in a molar ratio of 70/30) and other components in smaller proportions (NaI, $C_3Al_4$, $Al_2S_3$, $Si_3P_4$, $Na_2SO_4$, $Na_2S$, criolite, C, etc.) [2]. Owing to its composition, aluminium saline slag is an important byproduct of considerable economic value that is worth recovering, as long as the process can be economically viable.

The management of saline slag is readily carried out by separation of its components for possible recovery, or by storage in controlled landfills [12,13]. The recovery process consists of an initial separation of the metallic aluminium present in saline slag by means of electromagnetic and mechanical procedures [14]. This process is viable if the content in metallic aluminium is higher than 4-6 wt.%. The remaining waste consists of nonmetallic products and fluxes, and they can be valorised with the HANSE process [2]. In this, the saline fraction is separated from the oxides. The saline fraction could initially be concentrated by means of electrodialysis, for example, for subsequent separation of the salts by evaporation [15]. In the same way, the collection of free salt oxide fractions is also of interest. It is noteworthy that the composition of the nonmetallic products can be highly variable. It depends on the nature of the material recycled, and for this reason it is difficult to propose generic recovery methods. For certain specific application, additional problems are related to that this fraction should be free of salts [14]. It is considered free of salts when the salt content is lower than 2 wt.%. Finally, it should be noted that the recovery of the saline fraction and of nonmetallic products is economically viable only if a concentrated flow of salt and a waste that is free of nonmetallic products can be obtained. The main drawback, aside from possible subsequent applications, is that these two determining factors cannot be ensured simultaneously, meaning that the process is not economically viable. Therefore, up to the moment the best solution continues being to maximize the recovery of the aluminium and to store the wastes in controlled landfills.

The new technologies of smelting, as the tilting rotary furnace, it does that the economic viability of the recycling of the saline slags is still very much minor. The reasons are different. There is minimized of important form the quantity of saline slag generated. The quantities of aluminium and especially of waste salines present in these saline slags are very much minor that those which are obtained in the saline slags produced in fixed shaft rotary furnace.

Therefore, as final conclusion it is necessary to highlight that the saline slags from secondary aluminium smelting processes are an important part of the generated wastes and that great part of the efforts of implantation of new technologies are directed to treir minimization. Nowadays, an economical use does not exist for this type of wastes.

For the saline slags proceeding from the plants of transformation of iron and of the manufacture of one of his alloys, the steel, they have been proposed in some uses related to the decontamination of wastes. In this way, for example, US patent application published as US4124405 [16] proposes the use of saline slags for the solidification of soluble pollutants in water, such as various metal cations, giving a stable product without leaching of the retained ions. The process comprises the mixture of the waste liquid with the saline slag, preferably in form particulated, in conditions of basic pH (higher than 8.5) and needs, moreover, the addition of an agent who promotes the hydration of the saline slag, which agents, preferably, are products that contain ions sulfate and ions of alkaline metals. Though, at first, the process refers to saline slags in general, only there are mentioned specifically the saline slags proceeding from the manufacture and treatment of the iron or the steel, as well as those of high ovens and ovens warmed electrically. The composition of the saline slags that are considered to be particularly suitable has higher CaO (30 - 50 wt.%), $SiO_2$ (25-40 wt.%), oxides of Fe (5 - 15 wt.%) and MgO (2 - 8 wt.%) content to that of the saline slags from the secondary aluminium smelting processes, being lower the percentage of $Al_2O_3$ (8 - 20 wt.%) present.

In a similar way, British patent application GB2054547 [17] refers to the elimination of heavy metals cations (like, for example, Hg, Cd, Cu, Pb, Cr, Zn, Cu, Fe and Mn) of waterwaste, using as adsorbent a powder obtained from a saline slag resulting from the manufacture of steel. In the description of the patent document there is mentioned that the saline slags proceeding from the manufacture of the steel contain habitually, between other components, 9-20 wt.% of $SiO_2$, 37-59 wt.% of CaO, 5-20 wt.% of FeO, 0.6-8.0 wt.% of MgO, 0.06-0.25 wt.% of S and 1.5-2.3 wt.% of $P_2O_3$. The percentage of $Al_2O_3$ is only of 0.1 - 2.5 wt.%. In relation to the procedure where the adsorption takes place, it consists in that the pulverized saline slag is added to the liquid that contains the heavy metals and is left a time of contact, so that the heavy metals could remain adsorbed in the saline slag; the contact can take place in a tank with agitation or, enclosedly, in a column in which there is present the saline slag, through which one makes flow the liquid with heavy metals.

In the description of the patent application GB2054547 [17] is commented that, though the mechanism of metal adsorption on the part of the products derived from these saline slags is not completely explained, the observed properties are related to the adsorption capacity of CaO, $SiO_2$ and the compounds of the phosphoric acid, to the effect of coprecipitation caused by the Fe, to the effect of precipitation caused by the S, to the substitution of ions related to the CaO and MgO and to the precipitation of hydroxides for the high value of the pH (pH 10.5 $\pm$ 1.0). For it, though there is mentioned that the pH of the liquid can adjust to 7 when the contact takes place between the dissolution and the saline slag, there are contemplated also the possibilities that the pH of contact between solution and saline slag is acid, and also lower than 1. Equally, the idea is a previous activation, by means of the treatment with an acid, of the particles of the powder of the saline slag, later using the saline slag for the treatment of liquids with an alkaline pH, of 10-11, which favors the precipitation of the cations of heavy metals as hydroxides. Nevertheless, also there is mentioned that some cations of metals, as Cd, Pb and Cr, do not meet affected by the pH, whereas, for the case of the Hg, there is recommended the use of an acid pH.

With regard to the surface of the saline slag, it is recommended the use of thin particles, in order that the increase of the specific surface area favors the capacity of adsorption, in spite of the fact that there is no direct relation between the size of the particle and the specific surface area. It is necessary to highlight that the possible effect of the pore size of the saline slag is not considered.

The experiments carried out with several cations of heavy metals different from the Hg (Cd, Pb, Cr, Cu, Ni, Zn, Mn and As), that are presented in the Table 8 of the document, indicate that a time of contact (t) of 30 minutes gives rise to an amount of retained cation $(q_t)$ of approximately 10 mg of cation for gram of saline slag, calculating it from the following formula:

$$q_t = (C_0 - C_t) \cdot \frac{V}{W}$$

where $C_0$ is the initial concentration of the metal cation (100 ppm in all the cases, concentration that in water solutions can be considered to be an equivalent to 100 mg/liter), $C_t$ is the concentration of the metal cation to a certain time $t$ of the experiment (in this case, after 30 minutes of treatment, after which, the remaining concentration of cation is ranging between 0.01 ppm for the Cr present in the aqueous solution at pH 2.0 and 0.21 ppm for the case of the presence ofPb in a solution of pH 7.0), V is the volume of solution used (0.1 liters in this case) and W is the weight of saline saline slag used in the experiment of adsorption (1.0 g).

South Korea patent application KR2005 0065755 [18], in turn, refers to the elimination of heavy metals contained in effluents using as adsorbent a saline slag from metallurgical processes that, in this case, it is a saline slag from high ovens of preparation of steel. Again, the composition of the saline slag used in said Korean patent application (see the Table 1 of the same one) shows higher contents of CaO (35 - 45 wt.%), $SiO_2$ (30 - 40 wt.%) and MgO (5 - 8 wt.%) to that of the saline slags from the secondary aluminium smelting processes, being also lower the percentage present of $Al_2O_3$ (10 - 15 wt.%). The saline slag suffers a process of treatment with an alkaline solution for 6 hours, dried for 24 hours and calcined to 250 - 350 °C, during 6 - 20 hours, at a temperature not higher than 350 °C in order that there is no degradation of the saline slag. The application KR20050065755 mentions that the treatment gives rise to increases in the specific surface area of the saline slag, which becomes 52 $m^2$/g. With that, the experiments carried out to test the Pb adsorption show a capacity of adsorption of 96.6 %, turning from an initial concentration of 100 ppm to a final concentration of 3.4 ppm when a 1 liter of a solution of Pb is injected to a column with a speed of 1 liter/minute.

Of analogous form, in the Japanese patent JP57031448 [19], a method is described for adsorbents in the treatment of waterwaste, in which a granulated saline slag is used as starting material; saline slags proceeding from plants of manufacture of steel are mentioned as a possible example. The saline slag is dispersed in an aqueous solution of an inorganic acid (that can be, for example, hydrochloric, nitric or sulfuric acid, with preference to 100 $cm^3$ of 4N HCl for every 14 g of saline slag), after which the pH increases up to near of 10 (preferably, with an aqueous solution of NaOH), giving rise to a precipitate that is filtered, washed, dehydrated, dried and pulverized or warmed up to a temperature of 300 - 900 °C (preferably, at 400 - 600 °C) between 20 minutes - 2 hours.

It would be interesting to find also for the saline slags of aluminium a procedure of transformation that was valorising them and that, preferably, was allowing the application of the product obtained in the industry, opening new routes to be incorporated in the economic chain. At present, nevertheless, the opening of these new routes for the saline slags of aluminium is pending of fulfillment. In fact, works published in the year 2005, later, for example, to the publication corresponding to the British patent application GB2054547 [17], qualified as not viable economically the integral valorization by means of separation of all or part of his components of the saline slags proceeding from the processes of the second melting of aluminium, recommending the minimization of their production [20,21]. The present invention provides a solution to this problem.

## REFERENCES

1. Aluminium Handbook. Vol. 1. Fundamentals and Materials. Aluminium-Verlag Marketing & Komunikation GmbH, (2003).

2. Aluminium Handbook. Vol. 2. Forming, Casting, Surface Treatment, Recycling and Ecology. Aluminium-Verlag Marketing & Komunikation GmbH, (2003).

3. V.K. Gupta, M. Gupta, S. Sharma. Process development for the removal of lead and chromium from aqueous solutions using red mud-an aluminium industry waste. Water Research, 35, (2001), 1125-1134.

4. H.S. Altundogan, S. Altundogan, F. Tumen, M. Bildik. Arsenic adsorption from aqueous solutions by activated red mud. Waste Management, 22, (2002), 357-363.

5. A. Tor, Y. Cengeloglu, M.E. Aydin, M. Ersoz. Removal of phenol from aqueous phase by using neutralized red mud. Journal of Colloid and Interface Science, 300, (2006), 498-503.

6. Y. Li, Ch. Liu, Z. Luan, X. Peng, Ch. Zhu, Z. Chen, Z. Zhang, J. Fan, Z. Jia. Phosphate removal from aqueous solutions using raw and activated red mud and fly ash. Journal of Hazardous Materials, B137, (2006), 374-383.

7. Y. Cengeloglu, A. Tor, M. Ersoz, G. Arslan. Removal of nitrate from aqueous solution by using red mud. Separation and Purification Technology, 51, (2006), 374-378.

8. A. Tor, Y. Cengeloglu. Removal of congo red from aqueous solution by adsorption onto acid activated red mud. Journal of Hazardous Materials, B138, (2006), 409-415.

9. J.R. Paredes, S. Ordoñez, A. Vega, F.V. Diez. Catalytic combustion of methane over red mud-based catalysts. Applied Catalysis B: Environmental, 47, (2004), 37-45.

10. S. Sushil, V.S. Batra. Catalytic applications of red mud, an aluminium industry waste: a review. Applied Catalysis B: Environmental, 81, (2008), 64-77.

11. Order MAM/304/2002, 8th of February 2002, about the recovery processes, waste treatments and european wastes list. BOE 43/2002, 19th of February 2002.

12. Gestión de las escorias salinas de la segunda fusión del aluminio. Technical Report, Serie Recycling of Materials, Institute for the Sostenibility of the Resources, Madrid (2002).

13. B.J. Jody, E.J. Daniels, P.V. Bonsignore, D.E. Karvelas, Recycling of aluminum saline slag, Journal of Resource Management and Technology, 20, (1992), 38-49.

14. J.N. Hryn, E.J. Daniels, T.B. Gurganus, K.M. Tomaswick, Products from saline slag residue-oxide, Third International Symposium on Recycling of Metals and Engineering Materials, P.B. Queneau and R.D. Peterson, Eds. The Minerals, Metals & Materials Society, (1995), 905-916.

15. K. Sreenivasarao, F. Patsiogiannis, J.N. Hryn, Concentration and precipitation of NaCl and KCl from saline slag leach solutions by eletrodialysis, Light Metals, R. Hunglen, Ed. The Minerals, Metals & Materials Society, (1997), 1153-1158.

16. US 4124405 A (J. Quiérot et al.). Publication data: November 7th, 1978.

17. GB 2054547 A (Nippon Kokan Kabushiki Kaisha). Publication data: February 18th, 1981.

18. KR 20050065755 A (Research Institute of Industrial Science Technology). Publication data: June 30th, 2005.

19. JP 57031448 B (Kogyo Gijutsuin; Kankyo Gijutsu Kaihatsu). Publication data: March 5th, 1980.

20. A. Gil, Management of the saline slag from secondary aluminium fusion processes, Industrial & Engineering Chemistry Research, 44, (2005), 8852-8857.

21. A. Gil, Gestión de las escorias Salinas de los procesos de segunda fusión del aluminio, Ingenieria Quimica, 425, (2005), 171-181.

22. S.J. Gregg y K.S.W. Sing. Adsorption, Surface Area and Porosity. Academic Press (1991).

23. M.A. Vicente Rodriguez, J. de D. López González, M.A. Bañares Muñoz, Preparation of microporous solids by acid treatment of a saponite, Microporous Materials, 4, (1995), 251-264.

24. A.W.M. Ip, J.P. Barford, G. McKay, Reactive Black dye adsorption/desorption onto different adsorbents: effect of salt, surface chemistry, pore size and surface area, Journal of Colloid and Interface Science, 337, (2009), 32-38.

25. D.D. Do, Adsorption Analysis: Equilibria and Kinetics. Imperial College Press (1998).

## SUMMARY OF THE INVENTION

The invention refers, in a first aspect, to a procedure for the transformation of saline slags generated at secondary aluminium smelting processes which comprises the steps of:

> a) contacting the saline slag generated at a secondary aluminium smelting process with an aqueous acid, basic or neutral solution;
> b) separating the activated saline slag obtained in step a) from the aqueous solution;
> c) warming the activated saline slag obtained in step b) in conditions that allow to stabilize the generated porous structure.

In a second aspect, the invention also refers to a saline slag characterized by having been obtained by subjecting a saline slag generated at a secondary aluminium smelting process to the above mentioned procedure.

In an additional aspect, the invention further refers to the use of this saline slag obtained by application of the procedure of the invention for the adsorption of metal cations present in liquid streams.

## BRIEF DESCRIPTION OF THE FIGURES

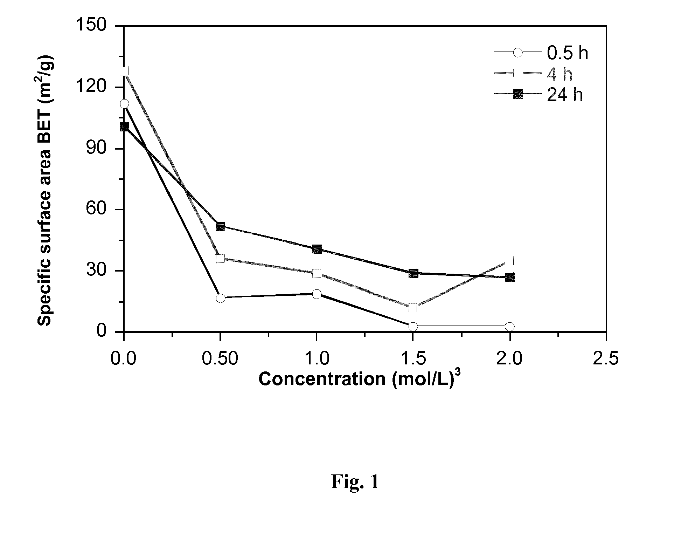

**Fig. 1:** Surface area, in square meters per gram of saline slag, of the saline slags treated with solutions of various concentrations of $H_2SO_4$, (ranging from 0 to 2 mol/liter, as it is indicated in the axis of abscisas), from several times of contact. Curves: ○ : saline slag treated for 0.5 hours with solutions with various concentrations of $H_2SO_4$; ●: saline slag treated for 4 hours with solutions with various concentrations of $H_2SO_4$; ■: saline slag treated for 24 hours with solutions with various concentrations of $H_2SO_4$.

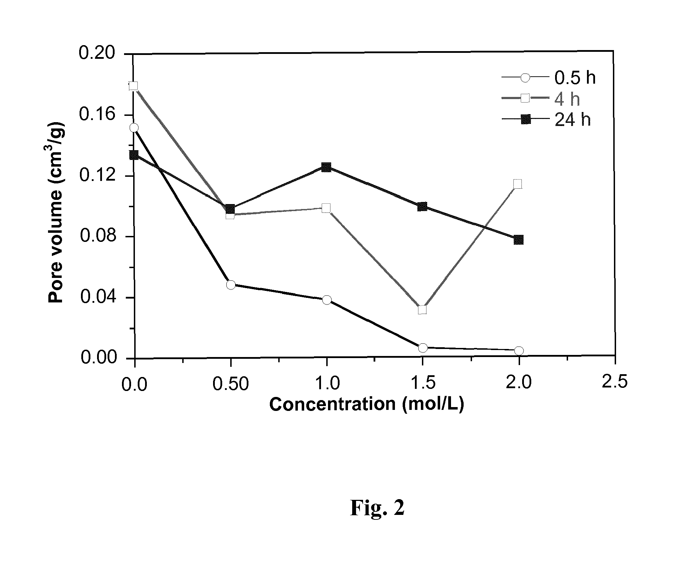

**Fig. 2:** Pore volumes, in cubic centimeters per gram of saline slag, of the saline saline slags treated with solutions of various concentrations of $H_2SO_4$, (ranging from 0 to 2 mol/liter, as it is indicated in the axis of abscisas), from several times of contact. Curves: ○ : saline slag treated for 0.5 hours with solutions with various concentrations of $H_2SO_4$; ●: saline slag treated for 4 hours with solutions with various concentrations of $H_2SO_4$; ■: saline slag treated for 24 hours with solutions with various concentrations of $H_2SO_4$.

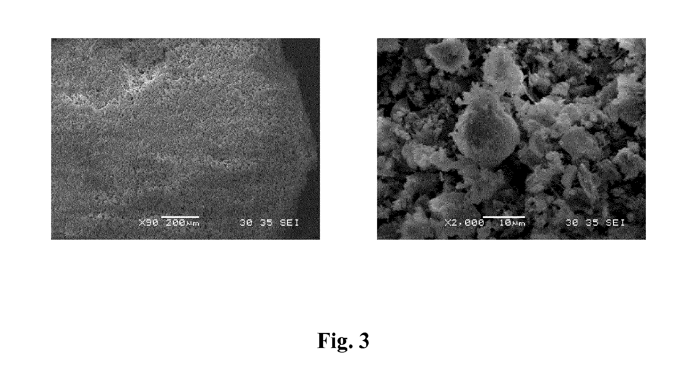

**Fig. 3:** Scanning electronic representative microphotographies of saline saline slags treated chemically. In the low part of each microphotography the magnification factor is indicated, as well as the length expressed in micrometers, to which every centimeter of the microphotography corresponds.

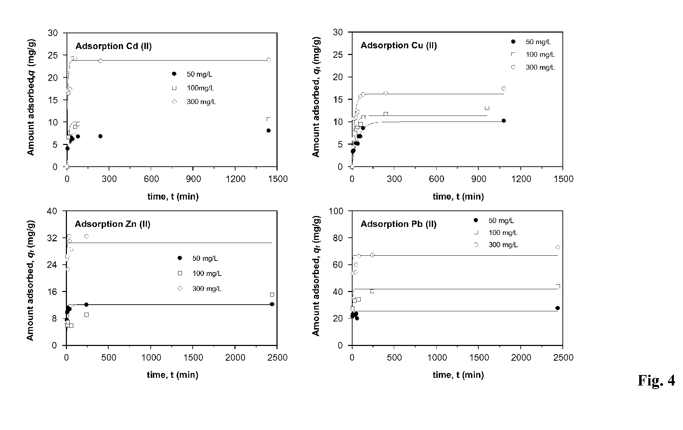

**Fig. 4:** Evolution with the time (indicated in minutes in the axis of abscisas) of the metal quantity adsorbed (expressed in milligrams of metal per gram of saline slag) by a saline slag obtained by the procedure of the invention. The metal cation tested is indicated in the top left part of every graph. A curve is represented for every initial concentration of tested cation. The initial concentrations were: ●: 50 $mg_{metal}$/liter; □: 100 $mg_{metal}$/liter and ○: 300 $mg_{metal}$/liter.

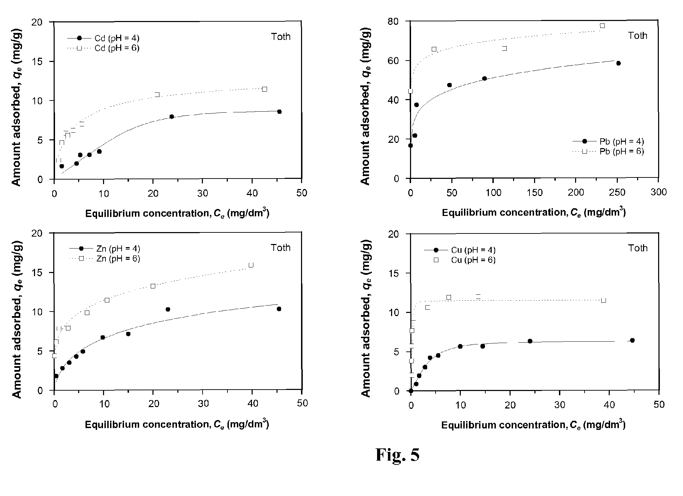

**Fig. 5:** Evolution of the amount of metal adsorbed (expressed in milligrams of metal per gram of saline slag) by a saline slag obtained by the procedure of the invention. The values of pH of the solutions of adsorption were: ●: pH=4 and □: pH=6.

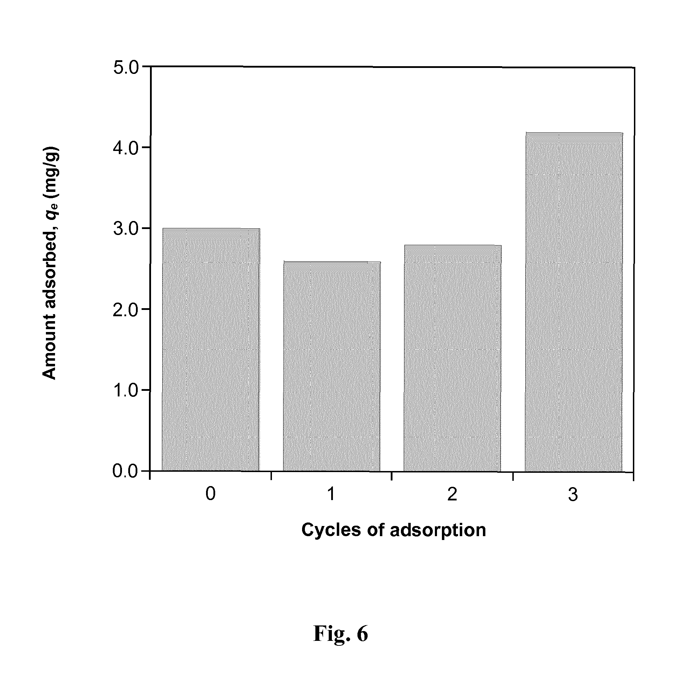

**Fig. 6:** Amount of Pb adsorbed (expressed in milligrams of metal per gram of saline slag), in the stages of the test of reutilization, by a saline slag obtained by the procedure of the invention, used before for metal adsorption and regenerated by means of treatment with acid solutions.

## DETAILED DESCRIPTION OF THE INVENTION

As it has been commented before, the present invention refers to a procedure for the transformation of saline slags generated at secondary aluminium smelting processes in a product that can be used as adsorbent of heavy metal cations present in contaminated liquid streams, as well as to the adsorbent product obtained by the above mentioned procedure and to the use of said product for the adsorption of heavy metal cations. The procedure of transformation of the saline slags of the secondary smelting of the aluminium in a stable adsorbent allows to give the valorization to these wastes, which are materials that are produced in big quantities and are catalogued like dangerous waste, not only because it diminishes their dangerousness but because, in addition, it makes his application possible in the industry.

The process consists of treating the saline slags proceeding from the secondary smelting of the aluminium with aqueous solutions, which can be solutions of several concentrations of acids, of bases or, even, water with no added acids or bases, separating later the obtained saline slag and stabilizing it by means of treatment at high temperatures (200 - 500 °C), being possible various times of treatment and heating.

An example of composition of a saline slag proceeding from a secondary aluminium smelting process, which might be an object of the process of transformation of the invention, would be the following one:

Table 1.- Typical chemical composition of the saline slags from a secondary aluminium smelting process.

| Compound | (wt.%) |
|---|---|
| $Al_2O_3$ | 29.60 |
| NaCl | 19.50 |
| KCl | 10.40 |
| $SiO_2$ | 2.75 |
| $Na_2O$ | 2.35 |
| MgO | 1.90 |
| CaO | 1.43 |
| $Fe_2O_3$ | 1.37 |
| N | 0.40 |
| $SO_3$ | < 0.10 |

In spite of the differences in the composition with the saline slags from processes of transformation of the iron and/or of obtaining of one of its alloys, the steel, the procedure of the invention surprisingly allows to obtain products with properties of adsorption of heavy metals that are higher to those of the adsorbents obtained from saline slags proceeding of industries related to the iron and/or the steel, with values of $q_e$ up to 54.5 - 71.7 mg/g of saline slag in the case of Pb(II). And this is so in spite of the fact that, in accordance with the teachings of British patent GB2054547 [17], it would be expectable that the capacity of adsorption of the saline slags from the secondary aluminium smelting processes were lower because the slags from processes of secondary smelting of aluminium exhibit lower quantities of CaO, $SiO_2$ and compounds of phosphoric acid, which should result in lower adsorption, lower, what should make decrease the coprecipitation effect, and lower ratio of MgO what, together with the lower ratio of CaO, should give rise to a lower capactity of substitution of ions. The values of $q_e$ found for the Pb(II), moreover, are obtained at pH acid (4 or 6), neither for what would be waited a significant effect of the precipitation of hydroxides.

The high capacity of adsorption observed in the products obtained after the application of the procedure of the invention to the saline slags from secondary aluminium smelting processes seems to be due partly to the high specific surface area that is achieved by means of the application of the procedure of the present invention, which specific surface area is in the range of 30 to 200 $m^2$/g of treated saline slag. This way, surprisingly, the obtained values are, in many cases, and particularly, when the treatment with the aqueous solution takes place in conditions of reflux, higher that the values of the specific surface areas obtained by applying the procedure of the Korean patent application KR20050065755 [18] to saline slags from high ovens, a circumstance that was not expected, particularly if it is considered that the products are obtained after processes at high temperatures (approximately 700 °C), since the temperature modifies the materials and, in general, it reduces the specific surface area of the same ones.

Therefore, the first aspect of the invention relates to a procedure for the transformation of saline slags from the secondary aluminium smelting processes which comprises the steps of:

a) contacting the saline slag from a secondary aluminium smelting process with an aqueous, acid, basic or neutral solution;
b) separating the activated saline slag obtained in step a) from the aqueous solution;
c) warming the activated saline slag obtained in step b) in conditions that allow to stabilize the generated porous structure.

The saline slags to which there is applied the procedure of transformation of the invention are the saline slags mentioned in the Order MAM/304/2002 [11] as "100308: salt slags from secondary smelting", comprised inside the paragraph 1003: Wastes from aluminium thermal metallurgy. It is preferred specially that the saline slags that are subjected to the procedure of the invention are saline slags proceeding from a fixed shaft rotary furnace, very specially when they exhibit a size lower than 1 mm. The typical chemical composition of this type of saline slags was shown before in the Table 1. The procedure of the invention can be also applied to saline slags from other processes of the secondary smelting of aluminium, such as the slags proceeding from a tilting rotary furnace.

The conditions in which the step a) of chemical activation can be carried out might be any ones, provided that they give rise to the modification of the structure of the saline slag. The pH of the aqueous solution of activation, the concentration of the chemical agents, the time and the temperature of contact are among the variables of the process of chemical activation that show more effect to the characteristics of the final product obtained.

The temperature of the process of contact generally is the room temperature, but it can be in the interval between 20 °C and the temperature of reflux, which temperature will be of approximately 100 °C at a pressure of 101.33 kPa (1 atmosphere). The pressure at which this step is carried out can be the atmospheric pressure, but also it can be carried out at higher pressures. The time of contact depends to a great extent on the temperature of reaction, but generally it is in the interval from 0.5 to 24 hours.

The step a) can be carried out in a recipient with agitation though, optionally and/or subsequentely to the first step of agitation, it can be carried out under conditions of reflux. As it is shown hereinafter in the Examples of the present invention, the treatment under conditions of reflux, specially when it is carried out with water to which no acid or no base has been added, is the one that gives place to the final product with the highest values of specific surface area. Therefore, in a preferred embodiment of the invention, step a) is carried out under conditions of reflux.

As it is used in the present application, the term "aqueous solution" encompasses not only the liquid compositions being composed of water in which one or more compounds are dissolved, specially when said compounds bestow an acid or basic pH to the solution by being present in it, but also to the solvent medium itself, water with no added compound of acid or basic character, which water, therefore, will have a pH neutral or very near the neutrality. The pH of the aqueous solution that contacts the saline slag is one of the variables that influences the final characteristics of the product obtained because, among others, it influences the chemical activation of the compounds that form part of the slag and, with it, the capacity of adsorption and reaction of the product finally obtained with the possible substances to be removed that are present in effluent pollutants that are wanted to be treated by the product obtained from the saline slag, heavy metal cations standing out from the substances to be removed. Therefore, ot is preferred that the pH of the solution of activation belongs lower than 2 or higher than 10, though it is possible that the aqueous solution of step a) exhibits other values of pH, included the value of neutral pH .

With regard to the relation between the saline slag of aluminium and the aqueous solution, a suitable relation is treating 10 g of the saline slag of aluminium with 0.1 liters of the aqueous solution.

The aqueous solution can be an acid or alkaline aqueous solution, in which there is present one or more acid compounds, or one or more basic compounds at concentrations ranging, preferably, from 0 to 2 mol/liter The acids can be of organic or mineral origin and it can be mentioned as examples nitric ($HNO_3$), sulfuric ($H_2SO_4$) or hydrochloric (HCl) acids. Among the possible compounds of basic character that can be added to obtain alkaline solutions sodium hydroxide (NaOH) is of particular importance..

The aqueous solution, as it has been commented before, can lack also acid or basic added compounds and can be simply water. In fact, in a preferred embodiment of the invention, the aqueous solution with the one the saline slag is treated is water to which no acid or base has been added. It is a particularly preferred embodiment of the invention that one in which the contact between the saline slag proceeding from a secondary aluminium smelting process and water takes place in conditions of reflux, since this treatment gives rise to products with a high specific surface area.

To carry out the step b) of separation of the saline slag, one can use any technology of separation, such as filtration, centrifugation, decantation of the supernatant after having allowed the mixture of saline slag and solution to rest, and the like. In the present invention, the utilization of centrifugation is preferred. The above mentioned centrifugation can be carried out, for example, at 4500 r.p.m.

The saline slag obtained in step b) is calcined in step c) to achieve the stabilization of the structure, preferably in air, but also in any gaseous mixture with presence of oxygen. There is preferred that, before carrying out the calcination, a warm-up takes place between 50 and 200 °C at atmospheric pressure, to dry the product. Later to this optional step of drying, the saline slag warms up in order that his calcination takes place. At atmospheric pressure, the conditions of calcination comprise a temperature that preferably is in the interval from 200 to 500 °C. The period of time of warming generally ranges between 0.1 and 100 hours, being the most habitual thing between 0.5 and 48 hours.

The tests of adsorption that are shown in Example 2 were carried out with an activated saline slag obtained by the application of the procedure of the invention in which the specific surface area turned out to be specially high, higher than 200 $m^2$/g. Therefore, a particularly preferred embodiment of the procedure of the invention is that one in which there are in use the conditions that give rise to the above mentioned saline slag activated, that is to say, the procedure in that a saline slag proceeding from a fixed shaft rotary furnace is put in contact with water in conditions of reflux for 4 hours, after which the saline slag is separated from the water by means of centrifugation to 4,500 r.p.m., the solid obtained is dried off at 60 °C for 16 hours at atmospheric pressure and calcined at 500 °C for 4 hours.

The composition of the saline slag obtained and its textural properties will depend on the particular conditions in which there is carried out the reaction of activation (step a)) of the procedure and the thermal treatment of the saline slag (step c)). Anyway, the product obtained after submitting saline slags from secondary aluminium smelting processes to the procedure of the invention constitutes a second aspect of the invention. In general, a porous solid product is obtained, which can be named "activated slags" or "adsorbent slags", in which the micropore volume ranges from 0.030 to 0.250 cm$^3$/g and the specific surface area ranges from 30 to 200 m$^2$/g, both deduced by means of tests of adsorption of N$_2$ at -196 °C. It is preferred those that show values of specific surface area higher than 52 m$^2$/g, specially if the values of specific surface area are higher than 100 m$^2$/g. Equally, it is a specially preferred embodiment of the activated slags of the invention that one in which the slag is obtained by applying the set of preferred conditions before specified, that is to say, the procedure in which a saline slag proceeding from a fixed shaft rotary furnace is put in contact with water in conditions of reflux for 4 hours, after which the saline slag is separated from the water by means of centrifugation to 4,500 r.p.m., the solid is dried off at 60 °C for 16 hours at atmospheric pressure and calcined at 500 °C for 4 hours.

As it has been commented before, these activated saline slags of the invention have good properties of adsorption/retention of heavy metal cations and can be used to adsorb, for example, heavy metal cations present in liquid contaminated streams. Therefore, yet one aspect of the invention is the use of the resultant product of the application of the procedure of the invention, that is to say, the "adsorbent slags" or "activated slags" obtained, for the adsorption of heavy metal cations contained in liquid streams. Therefore, it can be also thought that the invention refers to a method for the preparation of an adsorbent of heavy metal cations present in liquid streams which comprises preparing the adsorbent from saline slags from secondary aluminium smelting processes (steps a) to c) previously discussed), as well as at least an optional additional step in which the above mentioned adsorbent is put in touch with the liquid stream from which heavy metal cations are to be removed. Equally, the invention can be defined also as a procedure to adsorb/remove metal cations of liquid streams that contain them, which comprises the step of contacting the liquid stream with a solid adsorbent prepared from saline slags from secondary aluminium smelting processes and that, optionally, also comprises the steps of preparation of the above mentioned solid porous adsorbent. In any of the formulations, the invention would comprise also the product to be used as adsorbent, the "adsorbent slag" or "activated slag".

The tests that are shown hereinafter in the Example 2 of the present application demonstrate that the activated slags of the invention are useful to retain cations of various heavy metals, as it is demonstrated by the tests performed with Cd$^{2+}$, Cu$^{2+}$, Zn$^{2+}$ and Pb$^{2+}$. Therefore, a possible embodiment is that one in which the slags of the invention are used for adsorbing at least a cation selected from the group of Cd$^{2+}$, Cu$^{2+}$, Zn$^{2+}$ and Pb$^{2+}$, or combinations of the same ones. The results demonstrate that the adsorption takes place at different pH values of the liquid in which the heavy metals are present, being suitable, for example, the values of pH of 4 and 6 and the interval comprised between them, the value of pH 6 being preferred, because the best results are obtained. The tests demonstrate that Pb$^{2+}$ is the cation for which the best results are obtained, for what a preferred embodiment is that one in which the slags are used for adsorbing Pb$^{2+}$.

Also it was taken in mind the possibility of re-using the saline slags, obtaining that the saline slags of aluminium of the present invention can be reused as adsorbents of heavy metal cations. The first test of adsorption of the metallic cations was carried out in accordance with the described methodology till now: Example 2. Once used the saline slag as adsorbent, the solid is treated again with a solution of an acid to desorbe/clear the metallic cation retained. The solid is washed with water, dried off and it is used again as adsorbent such as it had been carried out initially. This process is repeated itself up to four times, four cycles, being observed that the saline slag can be regenerated and return to be used as adsorbent. These tests are explained with more detail in the Example 3 of the present application, where there is demonstrated the possibility of re-using activated slags already used previously to adsorb cations. Therefore, in a possible embodiment of the use of the invention, the slags that are used are activated slags obtained by means of the procedure of the invention that, once obtained, are used for metal adsorption and that, later, are reused after being submitted to a process of regeneration that comprises at least four cycles of activation, in each of which the used slag is put in contact with acid solutions as in step a) of the procedure of the invention, it is separated from the acid solution, washed with desionized water and dried off at a temperature between 50 and 200 °C at atmospheric pressure. A possible embodiment of the use of the invention, included inside the previous one, is that one in which the acid is HNO$_3$ and the saline slag treated with the same is dried off in a stove at 60 °C at atmospheric pressure.

The invention will be explained now with more detail by means of the Examples and the Figures included below.

## EXAMPLES

### Example 1.- <u>Obtaining saline slags chemically activated</u>

In the present Example, there was used a saline slag proceeding from a fixed shaft rotary furnace and of a lower size to 1 mm for his activation by means of chemical agents. His composition indicated itself previously in the Table 1.

The chemical activation was carried out using aqueous solutions of $HNO_3$ (65 %, Panreac), $H_2SO_4$ (98 %, Panreac) and NaOH (Panreac). The chemical activation was carried out using five dissolutions of every chemical reagent in several concentrations, between 0 and 2 $mol/dm^3$. The time of reaction with each of these solutions also was studied as a parameter, between 0.5 and 24 hours. In each activation 10 g of saline slag put in touch with 100 $cm^3$ of aqueous solution of chemical reagent. The speed of agitation of the suspensions was of 500 r.p.m. Before the time of reaction, the slurries were centrifuged for 20 minutes to 4,500 r.p.m. at room temperature using a Rotonta 460 S to separate the saline slag of the activante solution. The process is repeated itself several times, replacing every time the solution for deionized water with the aim to wash the saline slag of chemical agent. The obtained solids are dried in a stove for 16 h at 60 °C to atmospheric pressure and later for 4 hours at 500 °C.

The nomenclature used for every sample is $X$-$Y$-$t$, where $X$ is the concentration of the aqueous solution of acid reagent or used base, Y is the reagent used in the chemical activation and $t$ the time, in hours, of contact between the saline slag and the aqueous solution of chemical reagent. This way, for example, the sample named like 0-N-4 h, it is a saline slag treated with an aqueous solution of 0 mol/liter (with water) of $HNO_3$ (N) for 4 hours.

The textural properties of the activated saline slags were obtained by means of adsorption of $N_2$ (Air Liquide, 99.999 %) at -196 °C in a volumetric static commercial instrument (ASAP 2010, Micromeritics). The samples were degassed before for 24 h at 200 °C and at a pressure lower than 0.1 Pa. The amount of sample used in the experiment was of 0.2 g.

The adsorption of $N_2$ provides a series of quantitative properties as the specific surface area and the pore volumes. The specific surface area can be calculated by means of the application of the B.E.T. equation [22]:

$$\frac{p/p^0}{V\cdot(1-p/p^0)} = \frac{1}{V_m\cdot C} + \frac{C-1}{V_m\cdot C}\cdot p/p^0$$

where $p/p°$ is the relative pressure, $V$ is the volume of $N_2$ adsorbed in equilibrium for the sample to the relative pressure $p/p°$, $Vm$ is the volume of monolayer and C is a constant. The linear adjustment of the B.E.T. equation in the range of relative pressure between 0.05 and 0.20, allows to assure the formation of a monolayer and to calculate the volume of monolayer. With the volume of monolayer it is possible to calculate the specific surface area of the saline slag by means of the equation:

$$S = V_m\cdot a\cdot\frac{N_A}{\overline{\overline{V}}}$$

where S is the specific surface area, $Vm$ is the volume of monolayer, $a$ is the area occupied by a molecule of $N_2$ adsorbed on the surface of the saline slag (16.2 $Å^2$/molec), $N_A$ is the number of Avogadro (6.023 $10^{23}$ molec/mol) and $V$ is the volume occupied by a mol of $N_2$ to 25 °C and 1 atmosphere (22.386 $cm^3$/mol).

The total pore volumes ($Vp_{Total}$) are estimated from the volumes of $N_2$ adsorbed at a value of relative pressure of 0.99 [22], taking up that the density of the nitrogen in the pores is equal to that of the liquid nitrogen at -196 °C (0.81 $g/cm^3$) [22]. The results relating to the textural properties obtained for the saline slag treated with several concentrations of $HNO_3$ for 4 hours are summarized in the Table 2.

Table 2.- Textural properties from $N_2$ adsorption at -196 °C for a saline slag treated with aqueous solutions of $HNO_3$.

| Sample | $S^a$ ($m^2/g^c$) | $Vp_{Total}{}^b$ ($cm^3/g^c$) |
|---|---|---|
| 0-N-4 h | 109 | 0.125 |
| 0.5-N-4 h | 102 | 0.121 |
| 1-N-4 h | 58 | 0.085 |
| 1.5-N-4 h | 31 | 0.052 |
| 2-N-4 h | 31 | 0.046 |

[a] Specific surface area;
[b] Total pore volume;
[c] grams of saline slag degassed

The evolution of the textural properties (specific surface area and pore volume) of the saline slag treated with aqueous solutions of several concentrations of $H_2SO_4$ and several times are summarized in Figures 1 and 2.

These materials also were characterized by means of scanning electron microscopy using a microscope JEOL, model JSM5610LV. A representative example of a saline slag treated with $H_2SO_4$, sample 2-N-4 h, is presented in Fig. 3.

The results indicate that the procedure of the invention allows to obtain "saline slags activated" of aluminium with values of specific surface area higher than the obtained for saline slags of steel, though the highest values are obtained with the low concentrations of chemical reagent, specially, to the value of concentration 0, as it is of the sample 0-N-4 h, corresponding to the water. Therefore, the specific surface area diminishes with the concentration of the chemical reagent used. In minor measure also it does the pore volume. These results are explained because the materials that they present in his structure $Al_2O_3$ or $SiO_2$ can be attacked by chemical acid reagents or base. Initially it can be a question of a small dissolution of the oxide that it allows to increase the textural properties of the initial material and inclusive to modify the surface of the solid with new centers of adsorption. If the reaction is prolonged in the time, or if the concentrations of the chemical reagents are high, it is possible to produce the dissolution of the material with loss of the initial properties [23].

Also there was studied the effect of the conditions of reflux in the textural properties of the saline slags of aluminium, using aqueous solutions previously described of the acids sulfuric or nitric or aqueous solutions of sodium hydroxide, in concentrations of 0 and 2 mol/liter. The time of treatment in this case was 4 hours, with the same treatments previously described to obtain the saline slags activated chemically.

The results relating to the textural properties obtained for the saline slag treated with several aqueous solutions of chemical reagents for 4 hours under conditions of reflux are summarized in the Table 3.

Table 3.- Textural properties from $N_2$ adsorption at -196 °C for a saline slag treated with aqueous solutions of NaOH (H), $H_2SO_4$ (S) and $HNO_3$ (N) under reflux conditions.

| Sample | $S^a$ ($m^2/g^c$) | $Vp_{Total}^b$ ($cm^3/g^c$) |
|---|---|---|
| 0-H-4 h (reflux) | 203 | 0.251 |
| 2-H-4 h (reflux) | 40 | 0.102 |
| 2-S-4 h (reflux) | 34 | 0.123 |
| 2-N-4 h (reflux) | 38 | 0.098 |

[a] Specific surface area;
[b] Total pore volume;
[c] grams of saline slag degassed

The results indicate that the treatment of the saline slag with the aqueous solution in conditions of reflux, specially when the aqueous solution is a water to which has not been added any acid or base (it shows 0-H-4 h (reflux)), gives place to a significant increase of the specific surface area, higher values to 200 $m^2/g$. A positive effect is observed also in the total pore volume.

**Example 2.- Evaluation of the adsorption capacity of heavy metals**

Later, one proceeded to evaluate the capacity of metal retention ($Cd^{2+}$, $Cu^{2+}$, $Pb^{2+}$ and $Zn^{2+}$) of the saline slags obtained by means of chemical treatment described in the Example 1.

The tests of adsorption of heavy metal cations consist of two phases. Initially the kinetic one of adsorption is studied of each one of the metals. One tries to study the effect of the time in the capacity of adsorption of the saline slags and to determine from what moment the adsorption is kept constant and has reached the equilibrium. Besides the time of adsorption, there is studied the effect of the initial concentration of the metallic cation, being in this case between 50 and 300 mg/liter the concentrations tested. Once identified this moment, the test of equilibrium is realized studying the effect of solutions with several initial concentrations of metallic cation. With this test tries to see what effect has the initial concentration and the pH in the quantity of metal adsorbed.

2.1. Kinetics of adsorption

The studies were realized in discontinuous regime, using 0.05 g of sample of adsorbent saline slag in every experiment and concentrations of metallic cation between 50 and 300 $mg/dm^3$. The used adsorbent corresponds to a saline slag treated only with water (the sample 0-H-4 h (reflux) of the Example 1), that is the one that presents better textural properties. The adsorption of metallic cations for a material is controlled by the physical and chemical superficial properties [24]. As physical superficial properties it is necessary to mention the specific surface area and the pore volume. The chemical properties depend on the functional groups. In this case, there was chosen the material that was presenting the highest specific surface area. The solution that contains the metallic cation not adsorbed is separated of the solid by means of centrifugation to 4,500 r.p.m. Later, the metallic content of the solution is determined by inductively coupled plasma optical emission spectroscopy (ICP OES).

The amount of metal cation adsorbed by the saline slag is calculated as:

$$q_t = (C_0 - C_t) \cdot \frac{V}{W}$$

where $C_0$ is the initial concentration of metallic cation, $C_t$ is the concentration of metallic cation to a certain time $t$ of the experiment, $V$ is the volume of solution used and $W$ is the weight of saline slag used in the experiment of adsorption.

The evolution with the time of the amounts adsorbed of several solutions of the metals, using the activated saline slag before mentioned, is included in the Fig. 4.

Comparing the obtained results it is observed that the adsorbed amount increases with the metallic cation in the solution. For the lowest concentrations, 50 and

100 mg/dm$^3$, only an important difference is observed when the adsorption of Pb(II) is studied (cation Pb$^{2+}$). It is precisely for this metallic cation where the capacity of adsorption of the saline slag observed is higher. Zn(II) and Cd(II) (cations Zn$^{2+}$ and Cd$^{2+}$, respectively) shows a similar capacity, being minor in the case of Cu(II) (cation Cu$^{2+}$). Under all conditions the equilibrium is reached, the maximum quantity of metallic retained cation, after 250 minutes. This time is the fixed to the tests of equilibrium that appear in the examples of the Fig. 5.

2.2. Effect of the pH of adsorption

Once determined the times to which the equilibrium is reached, several studies are realized in which there was evaluated the effect of the initial concentration and of the pH in the capacity of adsorption, using the same saline slag activated of the previous paragraph. The time fixed of equilibrium was 4 hours. The solution that contains the metallic cation not adsorbed is separated of the solid by means of centrifugation at 4,500 r.p.m. The metallic content of the solution is measured by inductively coupled plasma optical emission spectroscopy (ICP OES)

The amount of metal cation adsorbed by the saline slag is calculated as:

$$q_e = (C_0 - C_e) \cdot \frac{V}{W}$$

where $C_0$ is the initial concentration of metallic cation, $C_e$ is the concentration of metallic cation after 4 hours of adsorption, $V$ is the volume of solution used and W is the weight of saline slag used in the experiment of adsorption.

The evolution of the amounts adsorbed for various metals and solutions are included in the Figure 5. As it increases the initial concentration of the metallic cation, the retained amount also increases up to a plateau is reached. This situation is reached in the cases of Cd(II) and Cu(II) for low concentrations of the metallic cations. In the cases of Pb(II) and Zn(II) higher concentrations are required.

The conditions of pH in that the adsorptions are carried out also concern the amounts of metallic cations retained. For that, and in all the cases, the adsorption is more favored at pH=6 than at pH=4. The experimental results can be adjusted well if the Toth's equation [25] is used. By means of this model one tries to describe the process of adsorption, information being obtained across the constants of the equation that allows to predict the behavior of real systems.

$$q_e = \frac{q_T \cdot k_T \cdot C_e}{[1 + (k_T \cdot C_e)^{m_T}]^{1/m_T}}$$

where $q_e$ is the amount of metallic cation adsorbed by unit of mass of saline slag when the system reaches the equilibrium; $C_e$ is the concentration of metallic cation that it remains in solution; and $q_T$ and $k_T$ are the Toth's constants, the capacity of adsorption of the monolayer and the energy of adsorption. Finally, $m_T$ is an empirical constant that is obtained for every case when the results fit to Toth's equation. The parameters of Toth's equation obtained in the adsorption of Cd(II) and Cu(II) are summarized in the Table 4.

Table 4.- Parameters of the Toth equation for the adsorption of metallic cátions.

|  | Cd (II) | | Cu (II) | |
|---|---|---|---|---|
|  | pH=4 | pH=6 | pH=4 | pH=6 |
| $q_T$(mg/g) | 8.7 | 13.7 | 6.2 | 11.5 |
| $k_T$(dm$^3$/mg) | 0.05 | 0.45 | 0.19 | 2.6 |
| $m_T$ | 3.5 | 0.7 | 0.5 | 2.7 |
| R [a] | 0.98 | 0.990 | 0.995 | 0.98 |

[a] Regresion factor

The maximum amounts of metallic cations retained by a saline slag treated chemically appear in the Table 5. It can be observed, the Pb$^{2+}$ is the metallic cation that is adsorbed in higher amount for the treated saline slag. This behavior is observed independently of the value of the pH of the solution. For the four tested cations, the value of pH=6 seems to favor the adsorption in comparison to the value of pH=4.

Table 5.- Capacity of adsorption of a saline slag for heavy metallic cations present in aqueous solutions.

|  | $q^e$(mg/g) pH=4 | $q_e$(mg/g) pH = 6 |
|---|---|---|
| Cd (II) | 8.2 | 11.1 |
| Cu (II) | 6.3 | 11.7 |
| Pb (II) | 54.5 | 71.7 |
| Zn (II) | 10.3 | 14.5 |

**Example 3.- Reuse of saline slag as adsorbents of heavy metal cations**

In this example, it is proceeded to evaluate the adsorption capacity of the saline saline slags for four metallic cations (Cd$^{2+}$, Cu$^{2+}$, Pb$^{2+}$ and Zn$^{2+}$) following the methodology described in the Example 2.

The first stage of adsorption was identical to described in the Example 2 being the saline used saline slag 2-N-4 h and the time of adsorption fixing of 24 hours. The aqueous solution that contains the metallic cation not adsorbed is separated of the solid by means of centrifugation at 4,500 r.p.m. Later, the metallic content of the solution is determined by inductively coupled plasma optical emission spectroscopy (ICP OES). The solid is treated itself with 50 cm$^3$ of nitric acid of concentration 0.5 mol/dm$^3$ for 4 hours, preferably there is used the acid that has been used for the initial chemical activation, to desorb the metallic cation retained. The acid solution with the metallic cation is separated of the solid by means of centrifugation at 4,500 r.p.m. and the solid is washed repeatedly with water deionized. The solid is dried in a stove for 16 hours at 60 °C to atmospheric pressure and it returns to use as adsorbent, as it had been realized in the first stage. The process repeats itself four times. The amount adsorbed of Pb depending on the number of stages of reutilization and it is presented in the Fig. 6. Similar behaviors have been found for the other metallic cations that include in this patent, which allows to afirm that the saline slags activated chemically can be re-used as adsorbents.

**Claims**

1. A procedure for the transformation of saline slags generated at secondary aluminium smelting processes which comprises the steps of:

   a) contacting the saline slag generated at a secondary aluminium smelting process with an aqueous acid, basic or neutral solution;
   b) separating the activated saline slag obtained in step a) from the aqueous solution;
   c) warming the activated saline slag obtained in step b) in conditions that allow to stabilize the generated porous structure.

2. The procedure according to the claim 1, wherein the saline slag is generated from a fixed shaft rotary furnace or a tilting rotary furnace.

3. The procedure according to claim 1 or 2, wherein the saline slag is put in contact with the aqueous solution at a temperature between room temperature and the temperature of reflux.

4. The procedure according to claim 3, wherein the saline slag is put in contact with the aqueous solution at atmospheric or higher pressure.

5. The procedure according to any one of claims 1 to 4, wherein the time of contact ranges between 0.5 and 24 hours.

6. The procedure according to any one of the previous claims, wherein the aqueous solution is water.

7. The procedure according to any one of claims 1 to 5, wherein the aqueous solution is an acid solution.

8. The procedure according to claim 7, wherein the pH of the aqueous acid solution is lower than 2.

9. The procedure according to claim 7, wherein one or more acid compounds, organic or mineral, is/are present.

10. The procedure according to claim 9, wherein the aqueous solution contains one or more acids of the group of hydrochloric acid, sulfuric acid or nitric acid.

11. The procedure according to claim 9 or 10, wherein the concentration of the acids is of 2 mol/liter or lower.

12. The procedure according to any one of claims 1 to 5, wherein the aqueous solution is a basic solution.

13. The procedure according to claim 12, wherein the pH of the aqueous solution is higher than 10.

14. The procedure according to claim 12, wherein one or more basic compounds is/are present.

15. The procedure according to claim 14, wherein the aqueous solution contains NaOH.

16. The procedure according to claim 14 or 15, wherein the concentration of the basic compound or compounds is of 2 mol/liter or lower.

17. The procedure according to any one of the previous claims, wherein the contact between the saline slag and the aqueous solution is at the temperature of reflux, optionally with previous stirring.

18. The procedure according to claim 17, in which the aqueous solution is water.

19. The procedure according to any one of the previous claims, in that the step b) of separation of the saline slag is carried out by means of filtration, centrifugation or decantation of the supernatant decantation of the supernatant after having allowed the mixture of saline slag and solution to rest.

20. The procedure according to claim 19, wherein the separation is carried out by means of centrifugation at 4,500 r.p.m.

21. The procedure according to one of the previous claims, wherein the saline slag obtained in the step b) is the subject of a warming previous to step c) of calcination, to dry the product, at a temperature from 50°C to 200 °C at atmospheric pressure.

22. The procedure according to any one of the previous claims, wherein the saline slag obtained in step b), optionally after having been subjected to a process of drying, is calcined at a temperature from 200 to 500 °C, at atmospheric pressure.

**23.** The procedure according to claim 22, wherein the saline slag obtained in step b) is calcined for a time ranging from 0.1 to 100 hours.

**24.** The procedure according to claim 1, wherein a saline slag proceeding from a fixed shaft rotary furnace is put in contact with water under conditions of reflux for 4 hours, after this time the saline slag is separated from the water by means of centrifugation at 4,500 r.p.m., the solid obtained is dried off for 16 hours at 60 °C at atmospheric pressure and it is calcined for 4 hours at 500 °C.

**25.** A saline slag **characterized by** having been obtained by subjecting a saline slag generated at a secondary aluminium smelting process to the procedure of any one of claims 1 to 24.

**26.** A saline slag according to claim 25, with a pore volume between 0.030 and 0.250 $cm^3/g$ and a specific surface area between 30 and 200 $m^2/g$.

**27.** A saline slag according to claim 26, wherein the specific surface area is higher than 52 $m^2/g$.

**28.** A saline slag according to claim 25, obtained when a saline slag generated at a secondary aluminium smelting process is treated according the procedure of claim 24.

**29.** Use of a saline slag according to any one of claims 25 to 28 for the adsorption of metal cations present in liquid streams.

**30.** Use according to claim 29, for the adsorption of at least a metallic cation selected from the group $Cd^{2+}$, $Cu^{2+}$, $Zn^{2+}$ and $Pb^{2+}$ or combinations thereof.

**31.** Use according to claim 30, wherein the value of pH is 4 - 6.

**32.** Use according to claim 30 or 31, wherein the metallic cation is $Pb^{2+}$.

**33.** Use according to any one of claims 29 to 32, wherein the saline slag is the saline slag of claim 28.

**34.** Use according to any one of claims 29 to 32, wherein a saline slag obtained by the procedure of any one of claims 1 to 24 has been before used for the adsorption of metallic cations present in liquid streams and is re-used after being submitted to a process of regeneration that comprises at least four cycles of activation, in each of which the used saline slag is put in contact with aqueous acid solutions as in step a) of claim 1, is separated from the aqueous acid solution, washed with deionized water and dried off at a temperature from 50 °C and 200 °C at atmospheric pressure.

**35.** Use according to claim 34, wherein the aqueous acid solution is $HNO_3$ at a concentration of 0.5 mol/liter and drying occurs at 60 °C and atmospheric pressure.

**Fig. 1**

Fig. 2

**Fig. 3**

Fig. 4

Fig. 5

Fig. 6

# INTERNATIONAL SEARCH REPORT

| | International application No. |
| --- | --- |
| | PCT/ES2011/070431 |

**A. CLASSIFICATION OF SUBJECT MATTER**

*B01J20/08* (2006.01)
*B09B3/00* (2006.01)
According to International Patent Classification (IPC) or to both national classification and IPC

**B. FIELDS SEARCHED**

Minimum documentation searched (classification system followed by classification symbols)
B01J, B09B

Documentation searched other than minimum documentation to the extent that such documents are included in the fields searched

Electronic data base consulted during the international search (name of data base and, where practicable, search terms used)

EPODOC, INVENES, WPI, TXTUS, XPESP

**C. DOCUMENTS CONSIDERED TO BE RELEVANT**

| Category* | Citation of document, with indication, where appropriate, of the relevant passages | Relevant to claim No. |
| --- | --- | --- |
| A | DAS et al. Production of eta-alumina from waste aluminium dross. Minerals Engineering 2007, Vol.20, pages 252-258 | 1-35 |
| A | CA 2085056 A1 (DANIELS ET AL.) 11.06.1994, page 8, lines 17 - 34; figure 1 | 1-24 |
| A | EP 537635 A1 (CIOFFI CONTENTO TRADE SAS) 21.04.1993, example 1 | 1-24 |
| A | US 4368070 A (FRACCHIA) 11.01.1983, column 2, line 41 - column 3, line 4 | 1-24 |
| A | ES 2223218 B1 (REFINERÍA DÍAZ, SA) 16.02.2005, example 1 | 1-24 |

☐ Further documents are listed in the continuation of Box C. ☒ See patent family annex.

| | |
| --- | --- |
| * Special categories of cited documents:<br>"A" document defining the general state of the art which is not considered to be of particular relevance.<br>"E" earlier document but published on or after the international filing date<br>"L" document which may throw doubts on priority claim(s) or which is cited to establish the publication date of another citation or other special reason (as specified)<br>"O" document referring to an oral disclosure use, exhibition, or other means.<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other documents , such combination being obvious to a person skilled in the art<br>"&" document member of the same patent family |
| Date of the actual completion of the international search<br>28/09/2011 | Date of mailing of the international search report<br>**(25/10/2011)** |
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>A. Rua Aguete<br><br><br>Telephone No. 91 3498518 |

Form PCT/ISA/210 (second sheet) (July 2009)

## INTERNATIONAL SEARCH REPORT

Information on patent family members

| International application No. |
|---|
| PCT/ES2011/070431 |

| Patent document cited in the search report | Publication date | Patent family member(s) | Publication date |
|---|---|---|---|
| CA2085056 A | 11.06.1994 | NONE | |
| EP537635 | | ITMI912763 A | 19.04.1993 |
| | | EP0537635 AB | 21.04.1993 |
| | | AT124931 T | 15.07.1995 |
| | | ES2074786 T | 16.09.1995 |
| | | GR3017230 T | 30.11.1995 |
| | | DK0537635 T | 04.12.1995 |
| | | DE69203423 T | 07.12.1995 |
| US4368070 A | 11.01.1983 | FR2470352 AB | 29.05.1981 |
| | | BR8007713 A | 09.06.1981 |
| | | GB2063843 AB | 10.06.1981 |
| | | DE3043916 A | 19.06.1981 |
| | | AR223562 A | 31.08.1981 |
| | | ES8203425 A | 01.07.1982 |
| | | YU301480 A | 28.02.1983 |
| | | GR71632 A | 20.06.1983 |
| | | CA1160059 A | 10.01.1984 |
| | | ATA578280 A | 15.02.1986 |
| | | IT1126403 B | 21.05.1986 |
| ES2223218 AB | 16.02.2005 | NONE | |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4124405 A
- GB 2054547 A
- KR 20050065755
- JP 57031448 B
- KR 20050065755 A

### Non-patent literature cited in the description

- Fundamentals and Materials. Aluminium Handbook. Aluminium-Verlag Marketing & Komunikation GmbH, 2003, vol. 1
- Forming, Casting, Surface Treatment, Recycling and Ecology. Aluminium Handbook. Aluminium-Verlag Marketing & Komunikation GmbH, 2003, vol. 2
- **V.K. GUPTA ; M. GUPTA ; S. SHARMA.** Process development for the removal of lead and chromium from aqueous solutions using red mud-an aluminium industry waste. *Water Research,* 2001, vol. 35, 1125-1134
- **H.S. ALTUNDOGAN ; S. ALTUNDOGAN ; F. TUMEN ; M. BILDIK.** Arsenic adsorption from aqueous solutions by activated red mud. *Waste Management,* 2002, vol. 22, 357-363
- **A. TOR ; Y. CENGELOGLU ; M.E. AYDIN ; M. ERSOZ.** Removal of phenol from aqueous phase by using neutralized red mud. *Journal of Colloid and Interface Science,* 2006, vol. 300, 498-503
- **Y. LI ; CH. LIU ; Z. LUAN ; X. PENG ; CH. ZHU ; Z. CHEN ; Z. ZHANG ; J. FAN ; Z. JIA.** Phosphate removal from aqueous solutions using raw and activated red mud and fly ash. *Journal of Hazardous Materials,* 2006, vol. B137, 374-383
- **Y. CENGELOGLU ; A. TOR ; M. ERSOZ ; G. ARSLAN.** Removal of nitrate from aqueous solution by using red mud. *Separation and Purification Technology,* 2006, vol. 51, 374-378
- **A. TOR ; Y. CENGELOGLU.** Removal of congo red from aqueous solution by adsorption onto acid activated red mud. *Journal of Hazardous Materials,* 2006, vol. B138, 409-415
- **J.R. PAREDES ; S. ORDOÑEZ ; A. VEGA ; F.V. DIEZ.** Catalytic combustion of methane over red mud-based catalysts. *Applied Catalysis B: Environmental,* 2004, vol. 47, 37-45
- **S. SUSHIL ; V.S. BATRA.** Catalytic applications of red mud, an aluminium industry waste: a review. *Applied Catalysis B: Environmental,* 2008, vol. 81, 64-77
- Gestión de las escorias salinas de la segunda fusión del aluminio. Technical Report, Serie Recycling of Materials. Institute for the Sostenibility of the Resources, 2002
- **B.J. JODY ; E.J. DANIELS ; P.V. BONSIGNORE ; D.E. KARVELAS.** Recycling of aluminum saline slag. *Journal of Resource Management and Technology,* 1992, vol. 20, 38-49
- Products from saline slag residue-oxide. **J.N. HRYN ; E.J. DANIELS ; T.B. GURGANUS ; K.M. TOMASWICK.** Third International Symposium on Recycling of Metals and Engineering Materials. The Minerals, Metals & Materials Society, 1995, 905-916
- Concentration and precipitation of NaCl and KCl from saline slag leach solutions by eletrodialysis. **K. SREENIVASARAO ; F. PATSIOGIANNIS ; J.N. HRYN.** Light Metals. The Minerals, Metals & Materials Society, 1997, 1153-1158
- **A. GIL.** Management of the saline slag from secondary aluminium fusion processes. *Industrial & Engineering Chemistry Research,* 2005, vol. 44, 8852-8857
- **A. GIL.** Gestión de las escorias Salinas de los procesos de segunda fusión del aluminio. *Ingenieria Quimica,* 2005, vol. 425, 171-181
- **S.J. GREGG ; K.S.W. SING.** Adsorption, Surface Area and Porosity. Academic Press, 1991
- **M.A. VICENTE RODRIGUEZ ; J. DE D. LÓPEZ GONZÁLEZ ; M.A. BAÑARES MUÑOZ.** Preparation of microporous solids by acid treatment of a saponite. *Microporous Materials,* 1995, vol. 4, 251-264
- **A.W.M. IP ; J.P. BARFORD ; G. MCKAY.** Reactive Black dye adsorption/desorption onto different adsorbents: effect of salt, surface chemistry, pore size and surface area. *Journal of Colloid and Interface Science,* 2009, vol. 337, 32-38
- **D.D. DO.** Adsorption Analysis: Equilibria and Kinetics. Imperial College Press, 1998